# EUROPEAN PATENT APPLICATION

(11) **EP 1 670 188 A2**
(43) Date of publication of application: **14.06.2006**
(21) Application number: 05301029.4
(22) Date of filing: 08.12.2005
(51) Int. Cl.: H04L 12/46, H04L 29/06

(54) **Methods and systems for connection determination in a multi-point virtual private network**

(30) Priority: 10.12.2004 US 009917
(71) Applicant: Alcatel, 75008 Paris (FR)
(72) Inventor: Krstulich, Zlatko, Ontario K2A 2V4, Ottawa (CA); Lee, Cheng-Yin, Ontario K2B 6A5, Ottawa (CA)
(74) Representative: Hervouet, Sylvie

(57) **Abstract**

A method and system for connecting a customer equipment (CE) communication device to a virtual private network (VPN) is provided. A virtual private network membership signal is generated at the customer equipment and transmitted to service provider equipment. The signal includes an identifier which identifies the customer equipment as a member of the virtual private network. On receiving the signal, service provider equipment such as a network element verifies that the customer equipment belongs to the virtual private network based on the customer identifier and only connects the customer equipment to the VPN if the verification is successful. The membership signal may be generated by a customer identification device distributed to the customer and installed in customer equipment to be connected to a virtual private network.

## Description

### Field of the Invention

The present invention relates to methods and systems for connecting customer communication devices to a virtual private network and in particular, but not limited to, methods and systems for connecting communication devices to a multi-point virtual private network (mpVPN).

### Background of the Invention

Virtual private networks allow predefined customer communication devices to be interconnected across a public network to enable private communication between devices which belong to the same VPN. Virtual private networks can be configured and implemented in a variety of different ways. For example, VPNs may be implemented using a link layer protocol such as TDM, FR (frame relay) or ATM (asynchronous transfer mode). These protocols allow point-to-point connectivity between two customer communication devices by forming a direct private connection or dedicated virtual private circuit (VPC) between the two devices, each connection being configured manually. However, VPNs based on these protocols are not generally implemented to allow multi-point connections, i.e. direct connections between all devices on the same virtual private network, with the service provider providing meshed connectivity.

A multi-point VPN is a service that implements an Ethernet LAN over a virtual layer 2 or layer 3 VPN in the carrier's domain, and typically connects numerous end-customer sites.

When configuring a virtual private network, it is important to ensure that only the intended subscriber equipment is connected to the VPN so that the network privacy and security of each customer is maintained. VPNs based on TDM, FR or ATM are less vulnerable to improper connection or misconfiguration as they are mostly point-to-point in nature and typically involve uniquely configured or custom data equipment at the customer premises. This implies that random misconnections would not result in an operational link and would very likely result in network alarms or "trouble tickets".

In contrast, configuring multi-point VPNs correctly and maintaining the configuration as customer drops are added and removed from the VPN instance can be error prone as it involves a number of configuration steps on carrier equipment that is shared across multiple end users, both at the physical layer (shared CPE or data terminating equipment) and the Operational Support System (OSS). The new generation of Ethernet/IP mpVPNs that interconnect customer CPE equipment utilize widely used and well standardized protocols and interfaces so that unwanted connections or "joins" to an mpVPN could easily go undetected and could provide a viable connection to an unintended party. Since the service provider would likely offer mpVPN services to a great number of clients such as enterprises and institutions, the risk and adverse consequences of inadvertently connecting the host node of one client to another client's mpVPN cannot be overlooked.

U.S. Patent Application Publication No. 2004/0093492 describes generating a digital certificate defining a VPN by aggregating configuration parameters from both a service provider and the customer. The digital certificate is used by the VPN service provider or the VPN customer to verify the VPN configuration or associated configuration logs by comparing information contained in the certificate with data stored at a customer workstation or in the service provider database.

When a customer communication device is to be connected to a VPN, there is a possibility that the physical connection of the device interface and the provider edge node will be incorrectly implemented so that for example the customer device becomes connected to the VPN of another customer. Although the methods discussed above may allow such a misconfiguration to be detected, none of these methods prevent a customer communication device from being initially connected to an incorrect VPN to thereby prevent any communication between the device and the incorrect VPN.

U.S. Patent Application Publication No. 2004/0088542 (Daude et al.) describes a method for interconnecting different VPNs. An interconnection device analyzes information contained in digital certificates to identify VPN properties of a device being connected and compares these properties to those contained in another digital certificate of another VPN.

The interconnection device implements the VPN rules from one or both of the interconnecting VPNs which are necessary to establish a secure interconnection. The interconnection device implements secure interconnection between VPNs without the need for a completely centralized decision-making process.

Draft-IETF-BONICA-13VPN-AUTH-03.txt "CE to CE Authentication from Layer 3 VPNs", June 2002, and Draft-IETF-13VPN-13VPN-AUTH-00.txt "CE to CE Member Verification_for Layer 3 VPNs" September, 2003, are concerned with the problem of VPN misconfigurations. A customer equipment-based verification mechanism is proposed in which each customer VPN site sends a "magic cookie" or token to the provider edge (PE) router that supports it. Upon receiving the token, the PE router connects the site to the VPN and distributes the token to other customer sites on the VPN, which verify the validity of the token. If the token is not valid, an alarm is raised at the customer VPN sites, and in this way misconfigurations are detected and indicated to the customer. As an optional variant, the first of these references describes an authentication process in which a PE router that receives a magic cookie from a CE transmits an authentication request which includes the magic cookie to a customer controlled server. If the server explicitly rejects the authentication request, the PE router terminates the authentication process and will neither accept traffic from the CE nor send traffic to the CE. However, if the customer controlled server cannot be contacted or sends no response at all, the PE router nevertheless joins the CE to the VPN. On the other hand, in the CE to CE based verification method disclosed in the second of these two references, there is no customer controlled authentication server and the PE simply connects the site to the VPN and immediately distributes tokens to other customer sites on the VPN.

A shortcoming of both of these proposals is that they are incapable of ensuring that a connection of non-VPN member equipment to a VPN is always prevented. Instead, they allow misconfigurations to be detected, and require customer interaction to rectify a carrier error.

### Summary of the Invention

According to one aspect of the present invention, there is provided a customer equipment communication device comprising signal forming means adapted to form a virtual private network membership signal for transmission to and use by service provider equipment, wherein the signal includes an identifier for identifying said customer equipment as a member of a predetermined virtual private network, and is conditioned to cause said service provider equipment to verify that said communication device is a member of said predetermined virtual private network.

According to another aspect of the present invention, there is provided an apparatus for controlling connection of a customer communication device to a virtual private communication network, comprising means for receiving a signal from a customer communication device, determining means for determining from the signal whether or not the customer communication device is a member of a predetermined virtual private communication network, and controlling means for controlling connection of the customer communication device to the predetermined virtual private network based on the determination made by the determining means.

According to another aspect of the present invention, there is provided a method of controlling connection of a customer communication device to a virtual private communication network, comprising the steps of receiving at service provider equipment a signal from a customer communication device, determining at the service provider equipment whether or not the customer communication device is a member of a predetermined virtual private communication network based on information contained in the signal, and controlling connection of the customer communication device to the virtual private network based on the result of the determination.

Advantageously, in this arrangement, a customer communication device, such as a switch, router or host transmits a signal containing a customer identifier to service provider equipment responsible for configuring one or more virtual private networks. The configuration section of the service provider equipment determines from the customer identifier contained in the signal whether or not the customer device is a member of a predetermined virtual private network before connecting the communication device to the VPN. Advantageously, this arrangement enables an incorrect physical connection of a customer communication device at a provider edge node to be detected before data communication between the device and the virtual private network is enabled.

Furthermore, as the authentication process is performed by equipment under the control of the service provider, rather than requiring a customer controlled authentication server, a customer identifier belonging to one VPN is not passed to the customer of another VPN, so that each customer identifier can remain secret as between one customer and another.

Moreover, this arrangement allows the service provider equipment to verify whether or not customer equipment should be connected to a VPN so that, unlike the prior art methodologies, the service provider equipment can always ensure that a connection is prevented if the authentication process fails.

In one embodiment, the authentication process is performed autonomously by the service provider network elements, for example, provider edge nodes, which are connected directly to customer equipment from which the VPN request is transmitted. Advantageously, this arrangement removes the need for element, network, or OSS management systems to partcipate in or orchestrate the authentication process thereby removing the need for modifying element, network or OSS systems to conform to a specific implementation of the authentication process. The simplification provided by this embodiment thereby makes the authentication process more robust and reliable.

According to another aspect of the present invention, there is provided a method of requesting connection of a customer equipment communication device to a predetermined virtual private network, comprising the steps of: forming at said customer equipment, a virtual private network membership signal for transmission to and use by service provider equipment, wherein the signal includes an identifier for identifying said customer equipment as a member of said predetermined virtual private network and is conditioned to cause said service provider equipment to verify that said communication device is a member of said predetermined virtual private network, and transmitting said signal from said customer equipment communication device to said service provider equipment.

According to another aspect of the present invention, there is provided a method of controlling connection of a customer communication device to a virtual private communication network comprising: monitoring at service provider equipment, receipt of a predetermined signal from a customer communication device, and controlling connection of said customer communication device to a predetermined virtual private communication network based on whether or not said predetermined signal is received at said service provider equipment within a predetermined time.

In some embodiments, where a connection between the customer communication device and the virtual private communication network is previously established, the step of controlling comprises disabling the connection if the signal is not received within said predetermined time.

In some embodiments, where a connection between the customer communication device and the virtual private communication network is previously established, the step of controlling comprises continuing to enable the established connection if the signal is received within said predetermined time.

In some embodiments, the controlling is performed as part of a virtual private network configuration process at the service provider equipment.

According to another aspect of the present invention, there is provided an apparatus for controlling connection of a customer communication device to a virtual private communication network comprising: means for receiving a signal from a customer communication device, determining means for determining from information in said signal whether or not said customer communication device is a member of a predetermined virtual private communication network, and controlling means for controlling connection of said customer communication device to said predetermined virtual private network based on the determination made by said determining means.

According to another aspect of the present invention, there is provided a method of detecting member equipment of a virtual private network comprising the steps of: receiving signals which originate from customer equipment communication devices, the signals each containing a customer identifier and a virtual private network identifier, detecting the identifiers in the signals and recording information based on each detected identifier.

According to another aspect of the present invention, there is provided a customer identification device comprising: a non-volatile memory for storing a customer identifier, signal forming means for forming a signal conditioned for transmission to a virtual private network configuration section of a predetermined carrier network and for causing said configuration section to verify that said device is a member of a predetermined virtual private network, the signal containing said customer identifier, and connection means for connecting said device to a customer communication device.

According to another aspect of the present invention, there is provided a method of controlling connection of customer communication equipment to a virtual private network, comprising the steps of: receiving at service provider equipment a predetermined customer identifier associated with a virtual private network from a customer equipment communication device, subsequently receiving another customer identifier, determining whether the other customer identifier is sufficiently similar to said predetermined customer identifier that both identifiers belong to the same customer, and controlling connection of service provider equipment based on the result of said determining step.

According to another aspect of the present invention, there is provided an apparatus for controlling connections to one or more virtual private networks, comprising receiving means for receiving from a customer equipment communication device a predetermined customer identifier associated with a virtual private network, and for receiving subsequent to receipt of said predetermined customer identifier, another customer identifier, and verification means for verifying whether the other customer identifier is sufficiently similar to said predetermined customer identifier that both identifiers belong to the same customer, and connection control means for controlling connection of customer communication equipment to said virtual private network based on the result of the verification by said verification means.

In some embodiments, the customer identifier comprises a field of characters which is common to all customer equipment of a predetermined customer to be connected to the virtual private network.

The characters of the field may be selected by the customer.

In some embodiments, the range of characters from which each character can be selected and/or the number of characters in the field, is sufficient to cause the probability of any virtual private network customer of the service provider selecting the same sequence of characters to be less than a predetermined value, for example less than 1 in a 1,000,000.

### Brief Description of the Drawings

Examples of embodiments of the present invention will now be described with reference to the drawings in which:
Figure 1 shows a schematic diagram of a communication network in which an embodiment of the present invention is implemented;
Figure 2 shows an example of a customer identification packet according to an embodiment of the present invention;
Figure 3 shows a communication network in which another embodiment of the present invention is implemented;
Figure 4 shows a communication network in which another embodiment of the present invention is implemented; and
Figure 5 shows an embodiment of a customer identification device according to an embodiment of the present invention.

### Description of Embodiments

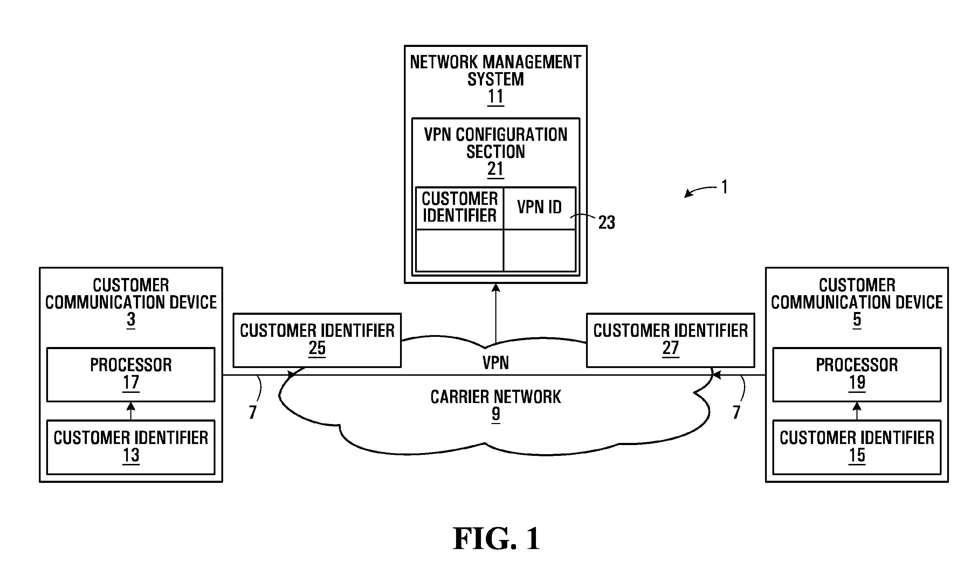

Figure 1 shows a schematic diagram of a communication network in which an embodiment of the present invention is implemented. In particular, Figure 1 shows first and second customer communication devices 3, 5 which are to be connected to a virtual private network 7 over a carrier network 9 which is managed by a network management system 11. The customer communication devices may comprise any communication device connectable to a network, for example, a workstation, a host computer, a switch or a router. A device 13, 15 is connected to each customer communication device which contains an identifier for the customer. The identifier is transmitted from the customer communication device to the carrier network 9 and is used by the carrier network to verify that the customer communication device is a member of the virtual private network 7.

In one implementation, the carrier network 9 is adapted to verify, using the customer identifier transmitted from the communication device, that the communication device is a member of the VPN before the carrier network connects the customer communication device 3, 5 to the VPN 7. Alternatively, or in addition, the customer identifier may be transmitted from the customer communication device to the carrier network after the customer communication device has been connected to the VPN to verify that the communication device is an authorized member of the VPN, and the signal may be transmitted periodically.

The customer identification device 13, 15 may comprise any suitable device that can be connected to the customer communication device for transmitting, or causing the customer communication device to transmit, a customer identifier to the carrier network. The device may include a memory for storing the customer identifier and may further include a signal generator for generating a signal which includes the customer identifier for transmission to the carrier network. Alternatively, the customer identification device may be adapted to transmit the customer identifier to a data communications processor 17, 19 of the customer communication device and the processor may generate a signal containing the customer identifier for transmission to the carrier network.

In this embodiment, the network management system 11 includes a virtual private network configuration section 21 which is responsible for the connection of customer communication devices to one or more virtual private networks. The VPN configuration section 21 includes a table 23 containing customer identifiers and an identification of each virtual private network with which they are associated.

In one implementation, a message or packet (or token) 25, 27 addressed to the VPN configuration section of the carrier network is formed at the customer communication device, which includes the customer identifier recorded in the customer identification device 13, 15, and is transmitted from the customer communication device to the network management system 11. On receiving the message, the VPN configuration section 21 checks the customer identifier against the list of customer identifiers stored in the table 23, and if a match is found, the VPN configuration section permits the customer communication device identified in the message to be connected to the VPN associated with the customer identifier. However, if the customer identifier in the message does not match any customer identifiers contained in the table 23, the VPN configuration section prohibits connection of the customer communication device to any VPN.

In another implementation, the packet 25, 27 transmitted from the customer communication device may contain a request for the customer communication device to be connected to a particular VPN. In this case, the packet contains the VPN identifier identifying the VPN to which the customer communication device is to be connected, and the customer identifier which may include a group identifier and/or an identification of the customer communication device, such as its network address. On receiving the request packet, the VPN configuration section 21 checks the VPN ID and the customer identifier contained in the packet with those stored in the table 23 and if a match of both parameters is found, the VPN configuration section 21 allows the customer communication device 3 to be connected to the VPN, otherwise connection to the VPN is denied.

Advantageously, this arrangement, in which an authentication signal is transmitted from a customer communication device to a carrier network, allows the carrier network to verify reliably whether or not the customer communication device is a member of a predetermined virtual private network before the device is connected to the VPN, and therefore prevents VPN misconfigurations. Furthermore, the customer communication device may be adapted to periodically transmit similar packets containing the customer ID to the carrier network to enable the carrier network to periodically check that the customer communication device continues to be a member of the virtual private network after being connected thereto.

In one embodiment, if a customer communication device becomes disconnected from the VPN, and its reconnection to the VPN is subsequently required, the customer communication device transmits a reconnection request and the customer ID (either separately or together) to the carrier network equipment responsible for VPN membership verification and connection. On detecting the request and customer ID, the carrier network equipment authenticates the customer equipment as belonging to the VPN using the customer ID before allowing reconnection.

The customer identifier may comprise any suitable identifier and may include several parts. In one embodiment, the customer identifier may simply comprise the name of the customer or another identifier which is unique to the customer. The customer identifier may comprise a common or group customer identifier which is used by customer communication devices all belonging to the same customer, and a second identifier which additionally identifies the particular customer communication device. The customer identifier may or may not also be encrypted.

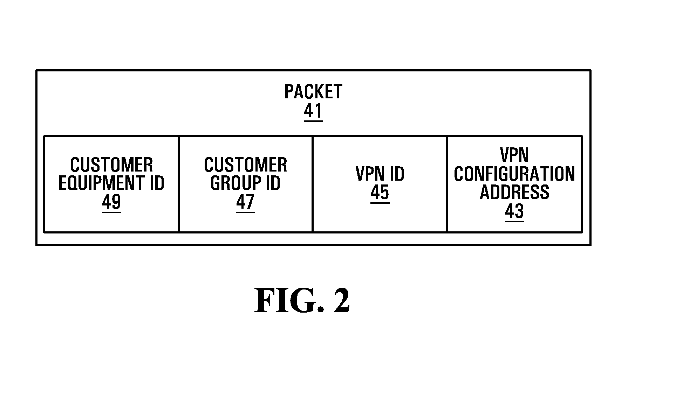

An example of a VPN membership verification packet is shown in Figure 2. The membership verification packet 41 includes a destination address which enables the packet to be transmitted to the VPN configuration section of the carrier network. The packet also includes a number of fields 45, 47, 49 which, in this embodiment contain the VPN identifier, a group identifier for the customer, and an identifier identifying the particular communication device to be connected to the VPN. Together with an appropriate query (e.g. one or more commands) the customer communication device will transmit an appropriate response containing the verification packet as shown in Figure 2 enabling the customer communication device to be verified by the service provider.

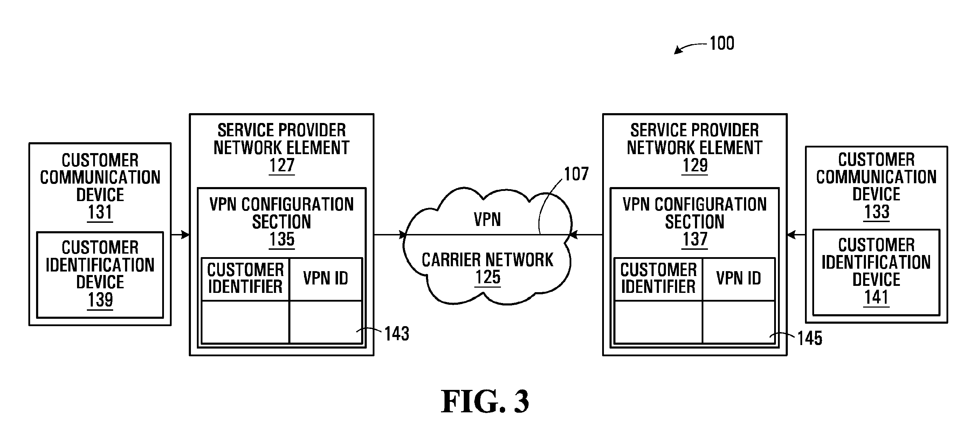

In other embodiments of the present invention, authentication of a customer communication device to be connected to a particular VPN may be performed by network devices of the carrier network other than the network management system. For example, authentication may be performed by network elements or nodes of the network such as a provider edge (PE) node of the carrier network. An example of such an implementation is described below with reference to Figure 3.

Referring to Figure 3, a carrier network 125 includes a plurality of PE nodes 127, 129, each of which serves as both ingress and egress nodes to customer communication devices 131, 133 connected thereto. Each PE node 127, 129 includes a VPN configuration section 135, 137 for configuring one or more virtual private networks and which also authenticates customer identification devices to be connected (or reconnected) or which are already connected to a particular VPN.

Each customer communication device 131, 133 includes a customer identification device 139, 141 connected thereto which transmits or causes transmission of a customer identifier from the customer communication device to a PE node of the carrier network 125.

When first configuring a new VPN 107, a record identifying the VPN and a customer identifier associated with the VPN is created and stored in the VPN configuration section of a PE node of the carrier network 125. This record may be created in response to a VPN configuration request transmitted from one of the customer communication devices to be connected to the VPN. The request may include the customer identifier and also a VPN identifier which is to be created. Alternatively, the VPN identifier may be determined by the carrier network and transmitted to the customer communication device. On receipt of the request, which includes the customer identifier, the PE node stores the customer identifier together with the VPN identifier and transmits both parameters to one or more other PE nodes of the carrier network 125.

Each additional customer communication device which is connected to the VPN is provided with a customer identification device which causes a message or packet containing the customer identifier to be transmitted to the PE node of the carrier network to which it is connected to enable the PE node to authenticate the customer communication device as a member of the VPN. The customer identification device connected to each customer communication device may be similar to any of the embodiments described above in connection with Figure 1 and may operate in a similar manner.

The customer identifier generally includes an identifier which is common to all members of the VPN and may also include an additional identifier which uniquely identifies the particular customer communication device. The customer identifier signal transmitted from each customer communication device enables the PE node to which it is connected to verify that the customer device is a member of the VPN group before allowing the connection, and this arrangement therefore prevents incorrect communication devices from being connected to the VPN. Furthermore, this arrangement uses PE nodes to verify whether or not a particular customer communication device should be connected to a VPN without involving the element management, network management, or the Operational Support System (OSS), and therefore does not involve and is independent of higher layers of software applications. This arrangement is also more robust as it does not rely upon the success of communications to and from the OSS or upon the OSS operating properly, or to have been so modified, to provide the required verification. This arrangement also does not require any pre-configuration regarding the association of a group customer identification to a specific VPN.

Customer identification devices may be provided to the customer for connection to the customer communication devices when the customer subscribes to a virtual private network service. For example, a quantity of customer identification devices may be issued to the customer by the service provider of the virtual private network service and distributed to each customer site which is to be connected to the service. A customer identification device is connected by authorized personnel such as IT staff, to customer equipment at each site that is to be connected to the VPN service. Each customer identification device causes a customer ID signal to be transmitted to the VPN configuration application or process of the carrier network, which can then verify that the customer equipment at each site should be connected to the VPN before allowing the connection.

In an alternative embodiment, customer identification devices may be preinstalled in the customer communication devices, for example by the manufacturer or system integrator, rather than at a later time after the communication devices have been installed at the customer site. When a VPN service is required, the customer identification devices could be activated to transmit or cause transmission of the customer ID to the configuration process of the carrier network. Knowledge of the customer ID is independently passed to the configuration process of the carrier network to allow verification that customer equipment should be connected to a VPN.

Since, in this embodiment, the group identification may be known to a third party, i.e. the manufacturer of the communication device with the preinstalled customer identification device, the customer identification signal may be suitably secured by any appropriate technique such as encryption techniques, of which public key infrastructure (PKI) techniques are one example. In this case, a key or customer signature is provided to the carrier network to allow the carrier network to read and authenticate the customer ID contained in the signal. If the customer key or signature matches, the configuration process of the carrier network allows the connection and enables data communication, otherwise the connection is denied.

Preinstallation of customer identification devices in customer equipment advantageously eliminates the need to separately distribute special ID devices that are limited to one customer, thereby reducing inventory and distribution concerns.

In another embodiment of the present invention, the customer may provide the service provider with information that enables the service provider to query and uniquely identify valid equipment before allowing connection to the mpVPN. For example, the carrier network may be provided with the MAC (Media Access Control) addresses of each customer communication device to be connected to a specific VPN instance, together with an appropriate query (e.g. one or more commands) which causes the customer communication device to transmit an appropriate response containing data which enables the customer communication device to be verified by the service provider as a valid member of that specific VPN. The response signal may contain a unique customer identifier and optionally other identifiers such as the VPN identifier to which the communication device is to be connected. In addition, the response signal may be secured, for example, by encryption. On receipt of the response signal by the VPN configuration process of the carrier network, the configuration process uses the signal to verify against its own verification data whether to connect the communication device to the VPN instance and permit data communication.

In other embodiments of the present invention, when commissioning a new virtual private network for the first time, the service provider equipment (e.g. network management system and/or network elements) may be arranged to connect the customer communication device to the virtual private network from which the customer identifier associated with that VPN is first received by the customer equipment. Advantageously, in this arrangement, the customer equipment needs no prior knowledge of the customer identifier associated with the VPN. On receiving subsequent requests from customer equipment to be connected to that VPN, the VPN configuration section of the service provider equipment simply verifies whether the subsequently received IDs match the first received customer ID and, if so, the connection is allowed, otherwise the connection is denied.

When a new VPN is first commissioned, the VPN configuration section may record the first received customer ID for future use in verifying subsequently requested connections. The record may be stored permanently or temporarily for a limited time and then deleted. In cases where no record of the customer ID is retained by the service provider equipment, and a connection to the VPN is subsequently requested, the service provider equipment may be adapted to request the customer communication device from which the customer ID was first received, to retransmit the customer ID to enable the VPN configuration section to compare this with the customer ID in the subsequent request to determine whether to allow the new requested connection.

Alternatively, the customer communication device first connected to the VPN may repeatedly transmit the customer identifier to the service provider equipment to enable the VPN configuration section to use the retransmitted customer ID in verifying a subsequently requested connection.

Advantageously, either of these two arrangements obviates the need for the service provider equipment to maintain a record of the customer identifier or even needing to know what the customer ID is, thereby significantly reducing the risk of the customer identifier being revealed to unauthorized parties through the service provider equipment.

The above-described VPN connection verification process is based on a comparison of customer identifiers received from customer equipment communication devices, rather than with any record of a customer identifier maintained by the service provider. The customer identifier may be generated either by the customer or the service provider. Advantageously, if the customer identifier is generated by the customer, the customer identifier need never be retained by the service provider equipment, as the service provider equipment simply performs an equivalency check between two customer identifiers it receives. This also assists in making the customer ID accessible to service provider personnel.

In any of the embodiments described above, the customer identifier may comprise a plurality of characters in which the range of characters from which each character can be selected and/or the total number of characters in the customer identifier is sufficiently large that it would be improbable for any other VPN customer of the same service provider to choose the same customer ID. For example, the range or number of characters can be selected so that the probability is less than at least 1 in 50, preferably less than at least 1 in 1000 and more preferably less than 1 in a million. This allows the customer ID to be selected by the customer, rather than by the service provider, in a similar manner to selecting a PIN (Personal Identification Number) or password.

In any of the embodiments described herein, the customer ID may comprise several parts, including a predetermined field which is common to all equipment of the same customer to be connected to a particular VPN. In this case, the service provider equipment may only need to compare this predetermined field of one customer identifier with the corresponding field of another customer identifier. In this way, the customer equipment need only check that two customer identifiers are sufficiently similar to one another, and there is no requirement for the whole customer identifier to be the same as another nor any need to check equivalency of the whole customer identifier. The field or portion of the customer ID selected for comparison must be that portion which is unique to each customer. If the customer ID is selected by the service provider, or otherwise verified as unique, the field may be relatively short. If the characters of the field are selected by the customer, the field shall be sufficiently long to ensure its uniqueness, as described above.

In embodiments of the invention, more than one customer identification device may be connected to or installed in a customer communication device to provide redundancy in case one customer ID device fails. This is particularly beneficial when the continuation of an allowed connection of a customer communication device to a VPN, once a connection has been established, is dependent on the continued transmission of the customer identification signal from the customer equipment to the carrier network. In this case, where failure to send the signal would otherwise cause the carrier network to disconnect the customer equipment from the VPN, the provision of one or more additional customer identification devices would allow continued transmission of the signal and thereby prevent disconnection of the customer equipment should one customer ID device fail. Transmission of the signal may be monitored by the CPE equipment so that failures can be detected and the auxiliary or backup customer identification device activated, as necessary.

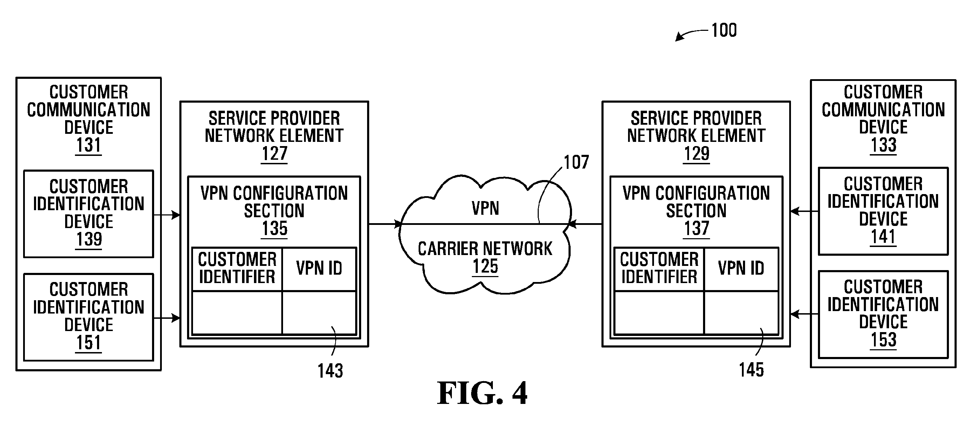

Figure 4 shows an example of a communication network in which a customer communication device has a plurality of customer identification devices to provide redundancy. The components of Figure 4 are similar to those shown in Figure 3, and like parts are designated by the same reference numerals. In this embodiment, each customer communication device 131, 133 comprises a first customer identification device 139, 141 and a second customer identification device 151, 153. The first customer identification device may constitute the normally active device which provides the customer identifier to the service provider network, and the second customer identification device may constitute the redundant device which is activated if the first customer identification device fails.

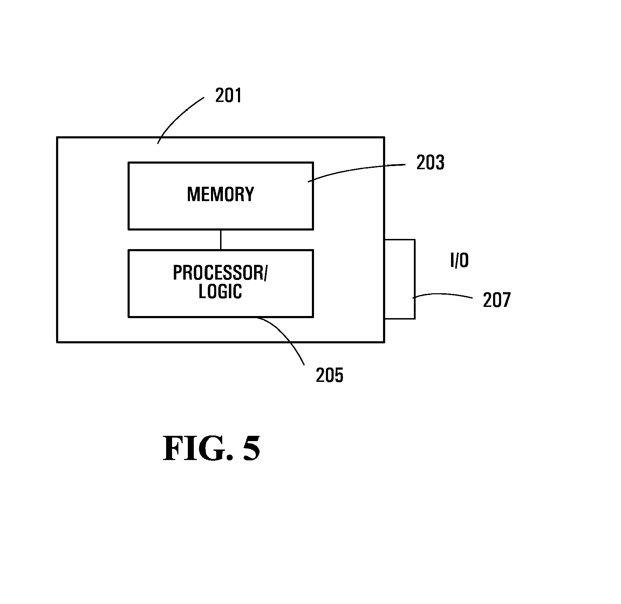

Figure 5 shows a schematic diagram of a customer identification device according to an embodiment of the present invention. The communication device 201 comprises a memory 203 (e.g. a non-volatile memory) which stores the customer identifier used by the service provider equipment to authenticate whether the customer equipment is member equipment of a predetermined virtual private network. The memory may also contain other data such as an identification of the virtual private network to which the customer belongs and/or the address of the service provider equipment which controls authentication and connection to VPNs. The customer identification device may also comprise a processor 205 for generating a packet or other signal containing the customer identifier used for authentication. A communication port 207 is also provided to connect the customer identification device to customer communication equipment at a customer site so that the signal generated by the customer identification device is transmitted to the service provider network. The port may comprise a unidirectional output port or a bi-directional input/output port. The customer identification device may be powered by either an internal or external power source, and in the case of an external power source, the customer identification device may be provided with suitable power receiving terminals and connectors.

Another embodiment of the customer identification device may comprise simply a memory storing the customer ID, and possibly other data as indicated above, and a suitable port for connection to customer equipment. The memory may comprise a non-volatile memory, so that data can be held therein without the need for a power source. In this case, the customer equipment is adapted to generate a suitable packet (or other signal) containing the customer ID for transmission to the service provider network.

Advantageously, the embodiments described herein enable a physical connection of a customer communication device to a virtual private network to be detected before data communication between the device and the VPN is enabled. For example, an incorrect connection may occur when VPN provider personnel physically connect a customer communication device intended to be connected to that customer's VPN to the VPN of another customer, by for example, connecting the communication link to an incorrect port. However, before data communication is enabled, the VPN configuration section checks whether the customer identifier transmitted from the customer communication device corresponds to the customer identifier for the VPN associated with that port, and as the customer communication device is connected to the incorrect port, the verification section will deny the connection, and may also provide an indication of the denied connection to the VPN provider personnel so that the misconfiguration can be rectified.

Changes and modifications to the embodiments described herein will be apparent to those skilled in the art.

## Claims

1. A customer equipment communication device comprising signal forming means adapted to form a virtual private network membership signal for transmission to and use by service provider equipment, wherein the signal includes an identifier for identifying said customer equipment as a member of a predetermined virtual private network and is conditioned to cause said service provider equipment to verify that said communication device is a member of said predetermined virtual private network.

2. A communication device as claimed in claim 1, wherein said identifier comprises at least one of an identifier uniquely identifying said customer equipment and an identifier used to identify a group of equipment belonging to said virtual private network.

3. A communication device as claimed in claim 2, wherein at least one of said unique identifier and said group identifier is encrypted.

4. A communication device as claimed in claim 1, wherein said identifier includes an identifier of said customer equipment and an identifier of said predetermined virtual private network.

5. A communication device as claimed in any preceding claim, wherein said signal forming means is arranged to condition said signal for transmission to service provider equipment adapted to configure said virtual private network.

6. A communication device as claimed in claim 5, wherein said service provider equipment comprises at least one of a service provider network management system and a network element at the edge of said service provider network.

7. A communication device as claimed in any preceding claim, wherein said signal forming means is adapted to form said signal at least one of before and after said communication device is connected to said virtual private network by said service provider.

8. A communication device as claimed in any preceding claim, comprising signal transmission means for transmitting said signal to said service provider equipment.

9. A communication device as claimed in claim 8, wherein said signal transmission means is adapted to transmit said signal at least one of before and after said customer communication device is connected to said virtual private network.

10. A communication device as claimed in claim 8, wherein said signal transmission means is adapted to repeatedly transmit said signal periodically.

11. A communication device as claimed in any preceding claim, further comprising a second signal forming means adapted to form said virtual private network membership signal.

12. A communication device as claimed in claim 11, further comprising detection means for detecting a failure of transmission of said virtual private network membership signal from said customer communication device and for causing a virtual private network membership signal to be formed by said second signal forming means in response to said detected failure.

13. A communication device as claimed in any one of claims 8 to 12, further comprising second signal transmission means for transmitting said virtual private network membership signal to said service provider.

14. A communication device as claimed in claim 13, further comprising detection means for detecting failure of transmission of said signal by said signal transmission means and means for causing said signal to be transmitted by said second transmission means in response to detection of said failure.

15. A communication device as claimed in any preceding claim, wherein said signal forming means is one of (1) preinstalled in said customer equipment communication device before said communication device is first delivered to said customer and (2) connected to said customer equipment communication device after said communication device is first delivered to said customer.

16. A communication device as claimed in any preceding claim, wherein said signal forming means comprises a customer identification device which contains said customer identifier.

17. A communication device as claimed in any preceding claim, further comprising receiving means for receiving a predetermined signal from service provider equipment and wherein said communication device is adapted to transmit said virtual private network membership signal to said service provider equipment in response to said predetermined signal.

18. A method of requesting connection of a customer equipment communication device to a predetermined virtual private network, comprising the steps of:
forming at said customer equipment, a virtual private network membership signal for transmission to and use by service provider equipment, wherein the signal includes an identifier for identifying said customer equipment as a member of said predetermined virtual private network and is conditioned to cause said service provider equipment to verify that said communication device is a member of said predetermined virtual private network, and transmitting said signal from said customer equipment communication device to said service provider equipment.

19. A method as claimed in claim 18, further comprising the step of connecting a customer identification device to said communication device to form said virtual private network membership signal.

20. A method of controlling connection of a customer communication device to a virtual private communication network comprising the steps of:
receiving at service provider equipment a signal from a customer communication device,
determining at said service provider equipment whether or not said customer communication device is a member of a predetermined virtual private communication network based on information contained in said signal, and
controlling connection of said customer communication device to said virtual private network based on the result of said determination.

21. A method as claimed in claim 20, wherein said customer communication device initially is not connected to said virtual private communication network, and wherein the step of controlling connection comprises enabling connection of the customer communication device to said virtual private communication network if, by said determining step, the customer communication device is determined to be a member of the virtual private communication network.

22. A method as claimed in claim 20, wherein said customer communication device is previously connected to said predetermined virtual private communication network, and the step of controlling connection comprises at least one of (1) permitting continued enablement of said connection if, by said determination step, the customer device is determined to be a member of the predetermined virtual private communication network, and (2) prohibiting a connection of said customer communication device to said predetermined virtual private communication network, if by said determining step, the customer communication device is determined not to be a member of said virtual private communication network.

23. A method as claimed in any one of claims 20 to 22, further comprising the step of monitoring at said service provider equipment receipt of a subsequent predetermined signal from said customer communication device, and controlling connection of said customer communication device to said virtual private communication network in response to said monitoring.

24. A method as claimed in claim 23, wherein the step of controlling said connection in response to said monitoring comprises disabling said connection if said further signal is not received within a predetermined time.

25. A method as claimed in any one of claims 20 to 24, wherein said service provider equipment comprises at least one of a network management system and a provider edge network element.

26. A method as claimed in any one of claims 20 to 25, further comprising the step of transmitting from said service provider equipment a customer identifier identifying said customer and a VPN identifier identifying said predetermined virtual private network to one or more provider edge network elements if, by said determining step, said customer communication device is determined to be a member of said predetermined virtual private network.

27. A method as claimed in any one of claims 20 to 26, wherein said determining step is performed as part of a virtual private network configuration process in said service provider equipment.

28. A method as claimed in claim 20, comprising receiving at said service provider equipment a signal requesting reconnection of a previously connected but subsequently disconnected customer communication device, and subsequently performing said determining and controlling steps in response to said signal containing said information.

29. A method as claimed in any one of claims 20 to 31, further comprising the step of providing said customer with a customer identification device for use in generating said signal from said customer communication device.

30. A method as claimed in claim 18, further comprising providing first and second independently operable customer identification devices each capable of forming said virtual private network membership signal, monitoring said first customer identification device from said virtual private network membership signal if said first customer identification device fails.

31. An apparatus for controlling connection of a customer communication device to a virtual private communication network comprising:
means for receiving a signal from a customer communication device,
determining means for determining from information in said signal whether or not said customer communication device is a member of a predetermined virtual private communication network, and
controlling means for controlling connection of said customer communication device to said predetermined virtual private network based on the determination made by said determining means.

32. An apparatus as claimed in claim 38, wherein said controlling means is adapted to enable connection of said customer communication device to said predetermined virtual private network if said determining means determines that the customer communication device is a member of said predetermined virtual private communication network.

33. An apparatus as claimed in claim 31 or 32, wherein said controlling means is adapted to prohibit connection of the customer communication device to said predetermined virtual private network if said determining means determines that said customer communication device is not a member of said predetermined virtual private network.

34. An apparatus as claimed in any one of claims 31 to 33, wherein said information comprises at least one of (1) a customer identifier, and (2) an identifier identifying said predetermined virtual private communication network.

35. An apparatus for controlling connection of a customer communication device to a virtual private communication network comprising:
monitoring means for monitoring receipt of a predetermined signal from a customer communication device, and
controlling means for controlling connection of said customer communication device to a predetermined virtual private communication network based on whether or not said predetermined signal is received within a predetermined time.

36. An apparatus as claimed in claim 35, wherein said controlling means is adapted to at least one of (1) disable a previously established connection of said customer communication device to said virtual private network if said predetermined signal is not received within said predetermined time, and (2) permit a previously established connection between a customer communication device and said predetermined virtual private network to continue if said predetermined signal is received within said predetermined time.

37. An apparatus as claimed in claim 35 or 36, further comprising indicator means for providing an indication to an operator if said predetermined signal is not received within said predetermined time.

38. A customer identification device comprising:
a non-volatile memory for storing a customer identifier, signal forming means for forming a signal conditioned for transmission to a virtual private network configuration section of a predetermined carrier network and for causing said configuration section to verify that said device is a member of a predetermined virtual private network, the signal containing said customer identifier, and
connection means for connecting said device to a customer communication device.

39. A method of controlling connection of customer communication equipment to a virtual private network, comprising the steps of:
receiving at service provider equipment a predetermined customer identifier associated with a virtual private network from a customer equipment communication device,
subsequently receiving another customer identifier,
determining whether the other customer identifier is sufficiently similar to said predetermined customer identifier that both identifiers belong to the same customer, and
controlling connection of service provider equipment based on the result of said determining step.

40. A method as claimed in claim 39, wherein said predetermined customer identifier is the first customer identifier associated with said virtual private network to be received, and connecting the customer equipment communication device from which said first customer identifier is received to said virtual private network.

41. A method as claimed in claim 40, wherein said other customer identifier is received from another customer equipment communication device, and connecting said other customer equipment communication device to said virtual private network if said other customer identifier is determined to be sufficiently similar to said predetermined customer identifier.

42. A method as claimed in claim 40, wherein said other customer identifier is received from another customer equipment communication device, and denying connection of said other customer equipment communication device to said virtual private network if the other customer identifier is determined to be insufficiently similar to said predetermined customer identifier.

43. A method as claimed in any one of claims 39 to 42, further comprising requesting the customer equipment communication device from which said predetermined customer identifier is received to send said predetermined customer identifier to said service provider equipment again in response to said service provider equipment receiving said other customer identifier, and wherein said determining step is performed based on the retransmitted predetermined customer identifier.

44. A method as claimed in any one of claims 39 to 43, comprising repetitively receiving said predetermined customer identifier which is retransmitted from said customer equipment communication device and wherein said determining step is performed based on a retransmitted predetermined customer identifier.

45. A method as claimed in any one of claims 39 to 44, wherein said predetermined customer identifier includes a field of characters which is common to all customer equipment of a predetermined customer to be connected to a predetermined VPN.

46. A method as claimed in claim 45, wherein the characters of said field are selected by said customer.

47. A method as claimed in claim 45 or 46, wherein at least one of (a) the range of characters from which each character in said field can be selected and (b) the number of characters in said field is sufficient to cause the probability of any other customer selecting the same sequence of characters to be less than a predetermined value.

48. A method as claimed in claim 47, wherein said predetermined value is 1 in a million.

49. A method as claimed in any one of claims 45 to 48, wherein said determining step comprises comparing said field with a field contained in said other customer identifier.

50. Apparatus for controlling connections to one or more virtual private networks, comprising receiving means for receiving from a customer equipment communication device a predetermined customer identifier associated with a virtual private network, and for receiving subsequent to receipt of said predetermined customer identifier, another customer identifier, and verification means for verifying whether the other customer identifier is sufficiently similar to said predetermined customer identifier that both identifiers belong to the same customer, and connection control means for controlling connection of customer communication equipment to said virtual private network based on the result of the verification by said verification means.

51. An apparatus as claimed in claim 50, wherein said connection control means is adapted to connect to said virtual private network the customer equipment communication device from which a customer identifier associated with said virtual private network is first received by said apparatus.

52. An apparatus as claimed in claim 51, wherein said connection control means is adapted to connect a customer equipment communication device from which said other customer identifier is received if said verification means determines that the other customer identifier is sufficiently similar to said first received customer identifier.

53. An apparatus as claimed in claim 52, further comprising transmitting means for transmitting to said first connected customer communication device a request for said predetermined customer identifier in response to receiving said subsequent customer identifier and wherein said verification means is adapted to verify whether said other customer identifier is sufficiently similar to said predetermined customer identifier transmitted from said customer equipment in response to said request.

54. An apparatus as claimed in any one of claims 50 to 53, wherein said customer identifier comprises a field of characters which is common to all customer equipment of a predetermined customer to be connected to said virtual private network.
